# EUROPÄISCHE PATENTSCHRIFT

(11) **EP 4 201 670 B1**
(45) Veröffentlichungstag und Bekanntmachung des Hinweises auf die Patenterteilung: **07.05.2025**
(21) Anmeldenummer: 21216749.8
(22) Anmeldetag: 22.12.2021
(51) Int. Cl.: B32B 27/08, B32B 27/30, B32B 27/32, B65D 65/00

(54) **MEHRLAGIG VERBLOCKTER FOLIENVERBUND**
MULTILAYER INTERLOCKED FILM COMPOSITE
FEUILLE COMPOSITE BLOQUÉE MULTICOUCHE

(43) Veröffentlichungstag der Anmeldung: 28.06.2023
(73) Patentinhaber: Mondi AG, 1030 Wien (AT)
(72) Erfinder: Kruse, Alfons, 49413 Dinklage (DE); Neumann, Andreas, 33790 Halle (DE)
(74) Vertreter: Andrejewski - Honke Patent- und Rechtsanwälte Partnerschaft mbB

(56) Entgegenhaltungen:
- WO-A1-2020/159740
- DE-A1- 102018 132 333

## Beschreibung

Die Erfindung betrifft einen Polyolefin-basierten Folienverbund umfassend eine erste monoaxial gereckte Folienschicht und eine zweite, mit der ersten Folienschicht direkt oder indirekt verbundene zweite Folienschicht. Weiterhin betrifft die Erfindung eine Folienverpackung mit einem erfindungsgemäßen Folienverbund-Material.

Ein Folienverbund ist ein aus mehreren Folienlagen zusammengesetztes Verbundmaterial, bei dem vorteilhafte Materialeigenschaften der einzelnen Lagen miteinander kombiniert werden. Dabei werden die Folienlagen aus ein- oder mehrschichtigen Kunststofffolien gebildet, welche getrennt voneinander hergestellt und anschließend miteinander flächig verbunden werden. Hierzu kann insbesondere ein Kaschierkleber eingesetzt werden.

Folienverbund-Materialien werden aufgrund ihrer Vielseitigkeit vielfach als Verpackungsmaterial, beispielsweise in Beutelverpackungen eingesetzt. Hierzu wurden in der Vergangenheit die unterschiedlichen Anforderungen durch Folienschichten unterschiedlicher Materialien dezidiert wahrgenommen: Beispielsweise wurden als Außenschichten vielfach abriebresistente und strapazierfähige Folienlagen aus Polyestern, wie beispielsweise Polyethylenterephthalat (PET) oder aus biaxial orientiertem Polypropylen (BOPP) eingesetzt.

Innenseitig werden hingegen häufig Schichten aus leicht und zähflüssig schmelzenden Polyolefinen, wie beispielsweise Polyethylen (PE), als sogenannte "Siegelschicht" verwendet. Diese dienen der Verbindung des Folienlaminats/Folienverbunds mit siegelbaren Kunststoffoberflächen, wie beispielsweise gleich- oder verschiedenartigen Folien und Folienlaminaten.

Zwischen der Außen- und Siegelschicht werden und wurden vielfach zusätzliche Barriereschichten, wie beispielsweise Metallfolien oder metallisierte Kunststofffolien, vorgesehen. Diese dienen dazu, die Permeabilität des Folienverbunds, insbesondere für Sauerstoff und/oder Wasserdampf abzusenken.

Diese vielfältige Mischung aus verschiedenen Materialien stellt sich jedoch als sehr problematisch in Bezug auf die Nachhaltigkeit dar. Aufgrund des - nahezu untrennbaren - Verbunds unterschiedlicher Kunststoffmaterialien ist eine sortenreine Wiederverwertung nicht möglich. Auch zusätzliche Störstoffe, wie beispielsweise metallische Komponenten, senken weiterhin die Recyclingfähigkeit der bisherigen Verbundmaterialien.

Die Erfindung geht daher von einem sogenannten "Einstoff"-Polymermaterial aus, welches Polyolefin-basiert ist. Dies ist im Rahmen der vorliegenden Erfindung so zu verstehen, dass der Folienverbund (bzw. eine einzelne Folienlage) aus einem oder mehreren Polymermaterialien hergestellt sind, welche überwiegend (d.h. zumindest 50 Gew.-%) aus einem oder mehreren Polyolefinen bzw. deren Blends oder Copolymeren gebildet sind. Hierbei kommt zum Tragen, dass Polyolefine ähnliche chemische Eigenschaften aufweisen und sich daher besonders gut gemeinsam einer Wiederverwertung (Recycling) zuführen lassen. Insbesondere betrifft die Erfindung einen Folienverbund, welcher entweder auf Polyethylen (PE) oder auf Polypropylen (PP) basiert. Dies ermöglicht eine nahezu sortenreine Wiederverwertung.

Aus DE 10 2018 132 333 A1 ist ein Folienverbund mit einer durch Verrecken orientierten Außenlage und einer ungereckten Siegellage bekannt.

Hierbei ist jedoch problematisch, dass übliche Rezepturen und Aufbauten von Polyolefin-basierten Folienlagen - insbesondere aus PE und/oder PP - bisher keine gleichwertigen Eigenschaften zu bisherigen Außenlagen (insbesondere aus PET oder BOPP) oder Metall-haltigen Barrierelagen aufweisen. Gegenüber Folienlagen aus PET, Polyamid (PA) oder biaxial orientiertem Polypropylen weisen Folienlagen aus einem Polyolefin, insbesondere aus PE, eine geringere Steifigkeit und eine geringere thermische Dimensionsstabilität auf. Infolgedessen können die hieraus gebildeten Folienverbünde bei Hitzeeinwirkung - etwa bei einem Siegelvorgang - eine Welligkeit ausbilden, welche bei der Weiterverarbeitung von Nachteil ist. Auch das hieraus gebildete Endprodukt - beispielsweise ein Verpackungsbeutel - zeigt dadurch eine erhöhte Welligkeit, welche die Handhabung und das Befüllen erschwert und außerdem zu einem unansehnlichen Erscheinungsbild führt.

WO 2020/159 740 A1 offenbart mehrlagige Folienverbünde und betrifft den technologischen Hintergrund der Erfindung.

Vor diesem Hintergrund liegt der Erfindung die Aufgabe zugrunde, einen Polyolefin-basierten Folienverbund derart weiterzuentwickeln, dass er zu herkömmlichen Vielstoff-Komposita vergleichbare mechanische Eigenschaften aufweist. Durch den Verzicht auf sortenfremde Kunststoffe, wie beispielsweise PET, kann die Recyclingfähigkeit des Verbundmaterials deutlich gesteigert werden. Gleichzeitig verbessert sich auch die CO₂-Bilanz, da - neben einer potentiellen Materialeinsparung - bei der Herstellung von beispielsweise Polyethylen weniger CO₂ freigesetzt wird als bei einer vergleichbaren Menge eines Kunststoffs wie Polyethylenterephthalat oder Polyamid.

Gegenstand der Erfindung und Lösung dieser Aufgabe ist ein Folienverbund nach Anspruch 1 sowie eine Folienverpackung nach Anspruch 11. Bevorzugte Ausgestaltungen sind in den abhängigen Unteransprüchen angegeben.

Die Erfindung geht von einem Polyolefin-basierten Folienverbund aus mit einer ersten gereckten Folienlage und mit einer direkt oder indirekt mit der ersten Folienlage verbundenen zweiten Folienlage. Davon ausgehend ist erfindungsgemäß vorgesehen, dass die zweite Folienlage ungereckt ist und zumindest zwei miteinander verblockte Folienschichten aufweist. Durch die Kombination dieser beiden Folienlagen kann im Rahmen der Erfindung eine Optimierung der mechanischen Eigenschaften des Folienverbundes erreicht werden. So kann insbesondere auch bei sogenannten Einstoff-Strukturen eine verbesserte Biegesteifigkeit des Folienverbunds bzw. Folienlaminats erzielt werden.

Sowohl die Materialbahnen des erfindungsgemäßen Folienverbunds als auch daraus hergestellte Folienverpackungen (wie beispielsweise Folienbeutel) weisen deshalb in der Praxis eine geringere Welligkeit und eine bessere Plananlage auf. Im Rahmen der Erfindung werden hierzu die besonders gute Stabilität einer monoaxial - insbesondere in Maschinenrichtung (MD) gestreckten ersten Folienlage mit der verbesserten Steifigkeit einer verblockten zweiten Folienlage kombiniert.

Die Stabilisierung einer verblockten Folienschicht beruht dabei auf dem Effekt, dass (insbesondere mehrschichtige) Folien infolge von Erstarrungs- und Abkühlungs-Prozessen während der Herstellung häufig intrinsische mechanische Spannungen aufweisen. Diese Spannungen erzeugen in der fertig abgekühlten Folienbahn bzw. beim Produkt eine unerwünschte Welligkeit.

Im Rahmen der Erfindung ist vorgesehen, dass dieser Effekt durch das Verblocken zweier Folien miteinander ausgeglichen wird. Hierzu werden zwei ein- oder mehrschichtige Folien - vorzugsweise im erwärmten Zustand - mit zwei einander zugewandten Folienschichten flächig in Kontakt gebracht, sodass sich diese miteinander dauerhaft verbinden. Hierbei kommen besonders bevorzugt eine erste verblockte Folienschicht (erste Verblockschicht) mit einer zweiten verblockten Folienschicht (zweiter Verblockschicht) in Kontakt, welche eine nahezu (zumindest 95 Gew.-%) identische, vorzugsweise vollständig identische Polymerzusammensetzung aufweisen. Die Gleichheit der Polymere garantiert hierbei einen besonders guten Zusammenhalt.

Vorzugsweise ist die erste Verblockschicht Teil einer ersten Teilfolie (erste Blockfolie) und die zweite Verblockschicht Teil einer zweiten Teilfolie (zweiten Blockfolie), welche zur Bildung der zweiten Folienlage miteinander verblockt werden. Die erste Blockfolie und die zweite Blockfolie weisen dabei besonders bevorzugt einen identischen Aufbau mit einer umgekehrten Abfolge der einzelnen Folienschichten auf. So sind innenliegend unmittelbar eine identische erste Blockschicht und eine identische zweite Blockschicht miteinander in Kontakt, um die Verblockung zu bilden. In dieser bevorzugten Ausgestaltung kann eine besonders glatte und gleichzeitig stabile Folienlage erzeugt werden, da die herstellungsbedingt entstehenden Spannungen in den beiden Blockfolien jeweils aufgrund des umgekehrten Schichtaufbaus einander entgegengerichtet und betragsmäßig ähnlich stark ausgebildet sind und sich daher gegenseitig aufheben. Zusätzlich erhöht die mechanische Spannung zwischen den beiden miteinander verblockten Blockfolien die Steifigkeit der Folienlage und damit des gesamten Folienverbunds.

Gemäß einer besonders bevorzugten Ausgestaltung sind die erste Blockfolie und die zweite Blockfolie Teile eines mit sich selbst verblockten Blasfolienschlauchs. Derart kann sichergestellt werden, dass die Materialeigenschaften und die Materialzusammensetzung der ersten Blockfolie und der zweiten Blockfolie stets zueinander (zumindest lokal) so ähnlich sind, dass über die gesamte Folienlage ein konsistenter Kräfteausgleich erfolgen kann. Auch ist es so möglich, die Blockfolien noch während des Blasfolienprozesses zusammenzulegen. Das Verblocken geschieht so besonders bevorzugt bei einer erhöhten Temperatur, bei der die Blockfolien hohe Bindungskräfte untereinander ausbilden können.

Vorzugsweise weist die erste Folienlage eine Druckschicht auf. Diese kann daher auch als "Drucklage" bezeichnet werden. Die Druckschicht umfasst Pigmente, mit denen das äußere Erscheinungsbild des Folienverbunds - und damit eines daraus hergestellten Verpackungsbeutels - beeinflusst werden kann. Insbesondere bildet die erste Folienlage dabei eine erste Außenseite des Folienverbunds. Die Druckschicht weist vorzugsweise neben den Pigmenten auch als Bindemittel Nitrocellulose (NC bzw. Cellulosenitrat), Polyvinylbutyral (PVB) oder Polyurethan (PU) auf.

Gemäß einer besonders bevorzugten Ausgestaltung ist die Druckschicht an einer der zweiten Folienlage zugewandten Innenseite der ersten Folienlage angeordnet. Dies wird auch als Innen- oder Zwischenlagen-Druck bzw. KonterDruck bezeichnet.

Gemäß einer bevorzugten Ausgestaltung umfasst der Folienverbund - neben der monoaxial gereckten ersten Folienlage (insbesondere MDO-PE) und der verblockten ungereckten zweiten Folienlage - zumindest eine weitere Folienlage. Diese kann beispielsweise gegenüber der ersten Folienlage und der zweiten Folienlage eine weitere Funktion - beispielsweise als Barriere- oder Siegellage - übernehmen.

Die verblockte ungereckte zweite Folienlage ist vorzugsweise an einer Außenseite des Folienverbunds angeordnet und als Siegellage ausgebildet. Die Siegellage umfasst zumindest eine niedrigschmelzende Siegelschicht, welche eine geringere Schmelztemperatur aufweist als die übrigen Lagen, insbesondere eine geringere Schmelztemperatur als die der Siegellage gegenüberliegende äußerste Lage. Hierbei kann es sich insbesondere um eine als Drucklage ausgebildete erste Lage handeln.

Die Siegellage dient dazu, eine Verbindung des Folienverbunds durch sogenanntes Heißsiegeln zu ermöglichen. Dabei wird durch lokales Erhitzen die Siegelschicht geschmolzen, zumindest angeschmolzen bzw. plastifiziert. **In** diesem Zustand kann sie eine dauerhafte Verbindung - beispielsweise mit einer anderen Folie bzw. einem anderen (vorzugsweise gleichartigen) Folienverbund eingehen. Nach dem erneuten Abkühlen geht hieraus eine feste mechanische Verbindung hervor.

Die Polymerzusammensetzung der Siegelschicht ist dabei insbesondere so ausgebildet, dass bei einem Erhitzen des gesamten Folienverbunds auf eine vorgesehene Siegeltemperatur die Siegelschicht zwar in einen siegelfähigen Zustand versetzt wird, die übrigen Folienschichten bzw. Folienlagen jedoch keine irreversiblen Veränderungen durchlaufen. Insbesondere muss dabei gewährleistet sein, dass die monoaxial gereckte erste Folienlage nicht aufgeschmolzen wird bzw. die Orientierung des Materials beeinträchtigt wird. Der Temperaturbereich unterhalb einer solchen Grenztemperatur und oberhalb der Temperatur, in welcher die Siegelschicht siegelfähig wird, (jeweils unter Berücksichtigung der Siegelzeit und des Siegeldrucks) wird auch als sogenanntes "Siegelfenster" bezeichnet. Dessen Grenzwerte werden maßgeblich durch die Zusammensetzung des Folienverbunds bestimmt.

Besonders bevorzugt enthält die Siegellage einen Anteil von HDPE von zumindest 30 Gew.-%. Das HDPE ist dabei bevorzugt in einer oder mehreren Folienschichten (Kernschichten) konzentriert bzw. ausschließlich in den Kernschichten angeordnet. Die Kernschichten sind dabei insbesondere nicht an einer Außenseite der Siegellage angeordnet, sondern zumindest einer weiteren Folienschicht nach außen hin abgedeckt. Das HDPE trägt zu einer erheblichen Verbesserung der mechanischen Eigenschaften bei. Insbesondere die Festigkeit und Steifigkeit der Folienlagen können hierdurch verbessert werden.

Weiterhin umfasst die Siegellage zumindest eine Siegelschicht mit zumindest 20 Gew.-% eines PE mit einer Dichte von nicht mehr als 0,905 g/cm³ (insbesondere ULDPE, VLDPE und/oder VLDPE-m). Diese zeichnen sich durch eine gute Schmelzfähigkeit aus.

Weiterhin enthält die Siegelschicht vorzugsweise zumindest 70 Gew.-% Polyethylen mit einer Dichte von nicht mehr als 0,92 g/cm³ (LDPE, ULDPE, VLDPE, LLDPE, VLDPE-m und/oder LLDPE-m).

Zur besseren Recycling-Fähigkeit besteht die Siegelschicht zu zumindest 70 Gew.-% aus Homopolymeren und a-Olefin-Copolymeren. Die Siegelschicht enthält in einer besonders bevorzugten Variante entsprechend weniger als 30 Gew.-% an eingeschränkt recyclierbaren Vinyl- oder Butyl-Copolymeren, wie beispielsweise EVA.

Ganz besonders bevorzugt enthält die Rezeptur der Siegelschicht auch ein PE-Plastomer. Dabei macht das PE-Plastomer besonders bevorzugt zumindest 30 Gew.-%, insbesondere zwischen 30 Gew.-% und 50 Gew.-% der Siegelschicht aus. Als Plastomere werden Ethylen-a-Olefin-Copoylmere mit sehr niedriger Dichte bezeichnet, die Elastomer-ähnliche Eigenschaften und sehr gute Siegeleigenschaften aufweisen. Sie vereinen die Eigenschaften eines Elastomers mit den Eigenschaften eines Thermoplasten. Entsprechende Materialien sind unter den Handelsnamen Exact (Exxon Mobile), Engage (Dow) oder Queo (Borealis) erhältlich.

Gemäß einer besonders bevorzugten Ausgestaltung betrifft die Erfindung einen Folienverbund, welcher als "Einstoff"-System mit einer einzigen dominierenden Polymerart oder einigen wenigen dominierenden Polymeren ausgebildet ist. Der Folienverbund ist somit besonders gut für ein "sortenreines" Recycling geeignet.

Im Rahmen der Erfindung ist es auch möglich, dass die ungereckte verblockte zweite Folienlage innenliegend ausgebildet ist. Dabei kann sie insbesondere unmittelbar an die erste Folienlage angrenzend angeordnet und an der der ersten Folienlage abgewandten Seite durch ein oder mehrere weitere Folienlagen abgedeckt sein.

Hierzu ist bevorzugt vorgesehen, dass sämtliche Folienlagen entweder auf Polyethylen (PE) oder auf Polypropylen (PP) basieren. Das bedeutet, dass innerhalb der ersten Folienlage, innerhalb der zweiten Folienlage und gegebenenfalls innerhalb einer oder mehrerer weiteren Folienlagen des Folienverbunds die Summe der Gewichtsanteile von Polyethylen bzw. von Polypropylen sowie deren Varianten (insbesondere lineares Polyethylen, Metallocen-katalysiertes Polyethylen sowie dessen Copolymere) zumindest 50 %, vorzugsweise zumindest 90 %, ganz besonders bevorzugt zumindest 95 % beträgt. Hierdurch wird sichergestellt, dass bei einer Wiederverwertung durch Aufschmelzen ein einigermaßen einheitliches Kunststoffrezyklat mit technisch verwertbaren Eigenschaften entsteht.

Besonders bevorzugt sind die einzelnen Folienlagen jeweils aus einem oder mehreren Folienschichten mit jeweils einheitlichen Materialeigenschaften zusammengesetzt. Gemäß einer besonders bevorzugten Ausgestaltung der Erfindung basiert jede dieser einzelnen Folienschichten auf PE oder PP gemäß den oben genannten Kriterien.

Gemäß einer ganz besonders bevorzugten Ausgestaltung der Erfindung basiert der Folienverbund, vorzugsweise sämtliche Folienlagen, ganz besonders bevorzugt sämtliche Folienschichten auf Polyethylen. Somit betrifft diese Ausführungsvariante eine im strengsten Sinne "Einstoff"-Kombination, welche sich durch Aufschmelzen zu einem nahezu unmittelbar gebrauchsfertigen Kunststoffrezyklat aus multimodalem Polyethylen wiederverwerten lässt. Im Rahmen des erfindungsgemäßen Aufbaus der Folienlagen können hierbei dennoch mechanische Eigenschaften erreicht werden, welche bisher ausschließlich in der Kombination unterschiedlicher Polymermaterialien möglich waren.

Gemäß einer bevorzugten Ausgestaltung der Erfindung ist der Folienverbund frei von Folienschichten mit orientiertem Polypropylen (OPP) bzw. biaxial orientiertem Polypropylen (BOPP). Auch ist im Rahmen der Erfindung bevorzugt vorgesehen, dass der Folienverbund frei von Polyethylenterephthalat (PET), insbesondere frei jeglicher Polyester ist. Die Reduzierung bzw. der vollständige Verzicht auf diese bisher üblichen Materialien kann zu einer Reduzierung der Herstellungskosten und auch insbesondere zur Reduzierung des bei der Produktion anfallenden Kohlendioxids (CO₂) führen. Dies ist aus betriebswirtschaftlichen und umwelttechnischen Gesichtspunkten zu begrüßen. Gleichzeitig können im Rahmen des erfindungsgemäßen Lagen- und Schichtaufbaus anwendungsgerechte mechanische Parameter erzielt werden.

Gemäß einer bevorzugten Ausgestaltung ist zumindest eine weitere Folienlage als Barrierelage ausgebildet. Diese weist zumindest eine als Barriereschicht ausgebildete Folienschicht auf. Diese kann insbesondere Ethylen-Vinylalkohol-Copolymer (EVOH) enthalten. Vorzugsweise ist die Barriereschicht überwiegend, insbesondere zu 100 % aus EVOH gebildet. Das EVOH kann vorzugsweise einen Gewichtsanteil zwischen 24 % und 48 %, insbesondere ca. 32 % Ethylen enthalten.

Alternativ ist die Barriereschicht auf Basis von Polyvinylalkohol (PVOH) gebildet. Auch hier ist die Barriereschicht überwiegend, d.h. zumindest zu 50 Gew.-%, besonders bevorzugt zumindest 80 Gew.-%, insbesondere zu zumindest 90 Gew.-% aus Polyvinylalkohol. Eine Barriereschicht auf PVOH-Basis ist vorzugsweise an einer Außenseite einer der Folienlage bzw. als Beschichtung zwischen zwei benachbart angeordneten Folienlagen ausgebildet.

Gemäß einer besonders bevorzugten Ausgestaltung weist die Barriereschicht eine Stärke zwischen 1 µm und 10 µm, vorzugsweise zwischen 3 µm und 5 µm, insbesondere ca. 4 µm auf. In einer entsprechenden Folienstärke - im Verhältnis zu einer Stärke des Folienverbunds zwischen ca. 100 µm und 200 µm - lassen sich Fremdstoffanteile der Barriereschicht (beispielsweise aus EVOH) gut in einem Gemisch mit überwiegend PE, linearem PE, PE-m und/oder PP wiederverwerten.

Gemäß einer ganz besonders bevorzugten Ausgestaltung weisen mehrere, vorzugsweise sämtliche Folienlagen des Folienverbunds zumindest zwei miteinander verblockte Folienschichten auf. Der durch die Verwendung der verblockten Folienschicht erzeugte Vorteil einer erhöhten Stabilität und geringeren Neigung zur Wellenbildung kommt bei einer Vielzahl verblockter Folienlagen verstärkt zum Tragen.

Bei einem dreilagigen Aufbau des Folienverbunds aus einer Drucklage, einer Barrierelage und einer Siegellage ist im Rahmen der Erfindung bevorzugt zumindest die Siegellage mit zwei verblockten Folienschichten ausgebildet. Vorzugsweise kann jedoch zusätzlich auch die äußere Drucklage zwei verblockte Folienschichten aufweisen. Auch ist es denkbar, dass neben der Siegellage lediglich die Barrierelage zwei miteinander verblockte Schichten umfasst. Ganz besonders bevorzugt weisen sowohl die Drucklage, die Barrierelage als auch die Siegellage jeweils zumindest zwei miteinander verblockte Folienschichten auf.

Die Stärke der ersten Schicht (insbesondere als Druckschicht) beträgt vorzugsweise zwischen 20 µm und 50 µm, vorzugsweise ca. 30 µm.

Weiterhin ist vorzugsweise vorgesehen, dass die zweite Folienlage (insbesondere als Siegellage) eine Stärke zwischen 60 µm und 250 µm, insbesondere zwischen 100 µm und 180 µm aufweist.

Eine dritte, zwischen der ersten Folienlage und der zweiten Folienlage angeordnete weitere Folienlage (insbesondere als Barrierelage) weist ebenfalls vorzugsweise eine Stärke zwischen 20 µm und 80 µm, insbesondere zwischen 20 µm und 50 µm auf.

Die Folienlagen des Folienverbunds können im Rahmen der vorliegenden Erfindung auf übliche Weise miteinander verbunden werden. Insbesondere sind diese durch einen Kaschierkleber miteinander vollflächig verbunden - man spricht in diesem Fall auch von einem Folienlaminat. Der Kaschierkleber ist vorzugsweise PUR-basiert (Polyurethan-basiert). Im Rahmen der Erfindung können Folienlagen des Folienverbunds auch durch Thermokaschierung oder Extrusionskaschierung miteinander verbunden werden.

Anders formuliert betrifft die Erfindung auch die Verwendung zumindest einer ungereckten und verblockten Folienlage in einem Laminat bzw. Folienverbund in Kombination mit einer zumindest monoaxial gereckten zweiten Folienlage.

Im Rahmen der Erfindung sind insbesondere die folgenden Folienlagen-Anordnungen bevorzugt vorgesehen: 1.) Unverblockte erste Folienlage mit in Maschinenrichtung orientiertem Polyethylen (MDO-PE), mehrschichtige unverblockte mittlere Folienlage mit Folienschichten aus PE-EVOH-PE und zweite Folienlage mit verblockten PE-Schichten. 2.) Verblockte erste Folienlage mit in Maschinenrichtung orientiertem Polyethylen (MDO-PE), mehrschichtige unverblockte mittlere Folienlage mit Folienschichten aus PE-EVOH-PE und zweite Folienlage mit verblockten PE-Schichten. 3.) Unverblockte erste Folienlage mit in Maschinenrichtung orientiertem Polyethylen (MDO-PE), mehrschichtige verblockte mittlere Folienlage mit Folienschichten aus PE-EVOH-PE und zweite Folienlage mit verblockten PE-Schichten. 4.) Verblockte erste Folienlage mit in Maschinenrichtung orientiertem Polyethylen (MDO-PE), mehrschichtige verblockte mittlere Folienlage mit Folienschichten aus PE-EVOH-PE und zweite Folienlage mit verblockten PE-Schichten. Die Schichtabfolge der mittleren Folienlagen ist dabei nicht auf eine PolyethylenSchicht, eine EVOH-Schicht und eine weiteren PE-Schicht beschränkt, sondern kann auch weitere um- und/oder zwischengelagerte Folienschichten umfassen.

Ein weiterer Aspekt der Erfindung betrifft eine Folienverpackung, insbesondere einen Verpackungsbeutel mit einem Innenraum, welcher durch zumindest einen Folienabschnitt begrenzt ist. Erfindungsgemäß ist dabei vorgesehen, dass der Folienabschnitt aus einem Folienverbund wie zuvor beschrieben ausgebildet ist.

### Ausführungsbeispiele

Zur Wirkungsweise der vorliegenden Erfindung wurden Versuchsreihen durchgeführt, in denen jeweils ein konventionelles und ein verbessertes Folienmaterial aus dem Stand der Technik einer erfindungsgemäßen Variante gegenübergestellt wurden. Um die Folienverbünde qualitativ und quantitativ vergleichen zu können, waren die Vergleichsmuster dabei mit einer identischen Gesamtstärke ausgebildet.

Die drei Vergleichsfolien wiesen dabei einen dreilagigen Aufbau mit einer Außenschicht (Druckträgerschicht), einer mittleren Barriereschicht sowie einer innenliegenden Siegelschicht auf. Um die Ergebnisse vergleichbar zu halten, waren dabei die Druckträgerschicht und die Barriereschicht der Vergleichsbeispiele identisch ausgebildet:
Bei den nachfolgenden Zusammensetzungen sind die in den Versuchen eingesetzten Polymermaterialien der Stoffgruppe Polyethylen (PE) dabei - gemäß der üblichen Einteilung - in den folgenden Dichte-Klassen zu verstehen, wobei die Dichte (wenn nicht anders angegeben) jeweils in der Einheit von Gramm pro Kubikzentimeter (g/cm³) und die Anteile jeweils als Gewichtsprozent (Gew.-%) angegeben werden:
Ohne zusätzliche Angaben ist gewöhnliches Polyethylen in den drei Dichte-klassen LDPE (low density PE) zwischen 0,915 und 0,927 g/cm³, MDPE (medium density PE) mit einer Dichte zwischen 0,928 und 0,940 g/cm³ und HDPE (high density PE) mit einem Dichtebereich zwischen 0,941 und 0,963 g/cm³ eingeteilt.

Im Bereich der linearen Polyethylene wird gewöhnlich unterschieden zwischen ULDPE (ultra low density PE) zwischen 0,860 und 0,899 g/cm³, VLDPE (very low density PE) zwischen 0,900 und 0,917 g/cm³, LLDPE (linear low density PE) zwischen 0,918 und 0,927 g/cm³, LMDPE (linear medium density PE) zwischen 0,928 und 0,940 g/cm³ und LHDPE (linear high density PE) zwischen 0,941 und 0,963 g/cm³. Dabei sind lineare Polyethylene Ethylen-a-Olefin-Copolymere, die mit den Homopolymeren LDPE, MDPE und HDPE ohne Einschränkungen mischbar sind und sehr ähnliche Eigenschaften aufweisen. Daher schränken diese die Wiederverwertbarkeit nicht ein und sind uneingeschränkt den Polyethylenen im Sinne eines Einstoffmaterials zuzuordnen.

Die Metallocen-katalysierten Materialklassen VLDPE-m und LLDPE-m weisen üblicherweise denselben Dichtebereich wie ihre üblichen linearen Pendants (0,900 - 0,917 g/cm³ bzw. 0,918 - 0,927 g/cm³,) auf. Lediglich die Klassen der mittleren und schweren Metallocen-katalysierten Polyethylene weisen eine vergleichsweise höhere Dichte von 0,928 bis 0,947 g/cm³ bei LMDPE-m und 0,948 bis 0,963 g/cm³ bei LHDPE-m auf.

Die Copolymere des Polyethylen EVA (Ethylen-Vinylacetat), EMA (Ethylen-Methyl-Acrylat), EBA (Ethylen-Butyl-Acrylat) und EAA (Ethylen-Acrylsäure) weisen jeweils Dichten von mehr als 0,92 g/cm³ auf. Copolymere wie beispielsweise COC (Cyclo-Olefin-Copolymere) können mit einer Dichte von ca. 1,02 g/cm³ deutlich darüber liegen. Copolymere mit Ethylenanteilen sind zumindest eingeschränkt ebenfalls den Polyethylenen im Sinne eines Einstoffmaterials zuzuordnen. Dennoch sollten sie nur in geringen Mengen enthalten sein.

Zur Verfolgung einer "Einstoff"-Strategie sollten Fremdpolymere ohne jegliche Ethylenanteile dagegen vermieden werden. Das Ziel ist zumindest 95 Gew.-% an Homopoylmeren und linearen Copolymeren zu verwenden.

Die Außenanlage war bei allen Mustern als dreischichtige Coextrusionsfolie mit einer ersten Schicht (Außenschicht von 7 µm Stärke) aus einem Blend von HDPE und LMDPE gebildet. Die zweite Kernschicht wies eine Stärke von 11 µm auf und war aus einem Blend von HDPE, LLDPE und MDPE ausgebildet. Die dritte, im Folienverbund innenliegende Schicht - welche mit einem Konterdruck versehen worden ist - war wiederum aus einem Blend von HDPE und LMDPE mit einer Stärke von 7 µm gefertigt. Die Gesamtdichte der Außenanlage betrug im Ausführungsbeispiel 0,94 g/cm³. Die Außenanlage war außerdem in Maschinenrichtung monoaxial gereckt und dadurch orientiert.

Die Barrierelage wies einen symmetrischen fünfschichtigen Aufbau mit zwei Außenschichten (zur Außenlage und zur Siegellage) mit 9 µm Polyethylen auf. Hieran schlossen jeweils zwei Haftvermittlerschichten von 4 µm eines mit Maleinsäureanhydrid gepfropften Polyethylen-Copolymers (PE-MAH) an. Zwischen den beiden Haftvermittlerschichten war als Sauerstoff- und Fettbarriere eine 4 µm starke Schicht aus Ethylen-Vinylalkohol-Copolymer (EVOH) mit einem Ethylen-Anteil von ca. 32 % ausgebildet.

Die drei Vergleichsmuster unterschieden sich lediglich hinsichtlich des Aufbaus in der Siegellage, welche in allen drei Fällen eine Stärke von 160 µm aufwies.

### 1. Vergleichsmuster (Stand der Technik)

Das erste Vergleichsmuster aus dem Stand der Technik hatte eine Siegellage mit einem dreischichtig coextrudierten Aufbau. Die erste Siegelschicht von 40 µm umfasste dabei ein Polymerblend aus 70 % LMDPE mit einer Dichte von ca. 0,93 g/cm³ und einem Schmelzflussindex (MFI) von 0,5 g/10min und 30 % von einem LLDPE mit einer Dichte von 0,92 g/cm³ und einem Schmelzflussindex von 1,5 g/10min.

Die anschließende zweite Siegelschicht wies eine Stärke von 80 µm auf und war aus demselben Blend hergestellt wie die erste Siegelschicht. Als dritte Schicht der Siegellage (die eigentliche Siegelschicht zu Verbindung mit anderen Folien oder Folienverbünden) waren 40 µm eines Blends aus 55 % eines Polyethylen-Plastomers mit einer Dichte von 0,9 g/cm³ und einem Schmelzflussindex von 1,4 g/10min, 40 % Ethylenvinylacetat (EVA) mit einem Vinylacetat-Gehalt von 2,5 %, einer Dichte von 0,924 g/cm³ und einem Schmelzflussindex von 1,2 g/10min und 5 % eines LDPE mit einer Dichte von 0,91 g/cm³ und einem Schmelzflussindex von 2 g/10 min vorgesehen. Diese Rezeptur garantiert eine niedrige Schmelztemperatur, sodass in einem möglichst großen Siegelfenster ein gezieltes Aufschmelzen der innersten Siegelschicht gewährleistet werden kann, ohne die Außenschicht aus MDOPE zu beeinträchtigen.

### 2. Vergleichsmuster (Stand der Technik)

Bei einem zweiten Vergleichsmuster aus dem Stand der Technik wurde für die Siegelfolie eine verbesserte Rezeptur verwendet, welche zu verbesserten mechanischen Eigenschaften führt. Das Folienlaminat wies dabei eine identische Außen- und Barrierelage auf.

Die in Muster 2 verwendete Siegellage bestand aus einer dreischichtigen Coextrusionsfolie mit einer ersten (der Barrierelage zugewandten) Schicht von 40 µm Stärke. Diese war aus einem Blend von 70 % eines LMDPE mit einer Dichte von 0,93 g/cm³ und einem Schmelzflussindex von 0,5 g/10min sowie 30 % eines LLDPE mit einer Dichte von 0,92 g/cm³ und einem Schmelzflussindex von 1,5 g/10min gebildet. Diese Folienschicht trug zu einer besonders großen Zähigkeit der Siegellage und damit des Folienverbundes bei.

An die erste Schicht schloss eine zweite 80 µm starke Schicht aus hundertprozentigem HDPE mit einer Dichte von 0,96 g/cm³ und einem Schmelzflussindex von 0,6 g/10min an. Diese Kernschicht der Siegellage erhöhte insbesondere die Festigkeit und Steifigkeit des Folienverbunds.

Für verbesserte Siegeleigenschaften war an der Innenseite eine dritte, ebenfalls 40 µm dicke Schicht angeordnet, welche aus 65 % eines PE-Plastomers mit einer Dichte von 0,9 g/cm³ mit einem Schmelzflussindex von 1,4 g/10min, 35 % eines Ethylen-Vinylacetat-Copolymers mit einem Vinylacetat-Gehalt von 2,5 Gew.-%, einer Dichte von 0,924 g/cm³ und einem Schmelzflussindex von 1,2 g/10 min sowie 5 % eines LDPE mit einer Dichte von 0,91 g/cm³ und einem Schmelzflussindex von 2 g/10 min ausgebildet war.

### 3. Ausführungsbeispiel (Erfindung)

Die Siegellage der erfindungsgemäßen dritten Ausführungsform war aus einer 80 µm starken dreischichtigen Coextrusionblasfolie gebildet, welche mit sich selbst zu einer insgesamt 160 µm starken Gesamtlage verblockt wurde. Somit ergab sich bei der erfindungsgemäßen Siegellage ein insgesamt sechsschichtiger Aufbau:
Die erste zur Barrierelage zugewandte Schicht - welche gleichzeitig auch die sechste Schicht (Siegelschicht) bildete - war im Ausführungsbeispiel mit einer Stärke von 16 µm ausgebildet und wies ein Blend aus 65 % eines Metallocen-katalysierten LLDPE-m mit einer Dichte von 0,916 g/cm³ und einem Schmelzflussindex von 1,0 g/10 min und 35 % eines PE-Plastomers mit einer Dichte von 0,9 g/cm³ und einem Schmelzflussindex von 1,4 g/10 min auf. In dieser Materialzusammensetzung wurde ebenfalls eine niedrige Schmelztemperatur für ein besonders großes Siegelfenster (Temperaturbereich zwischen dem Schmelzpunkt der Siegelschicht und dem Schmelzpunkt der MDOPE-Außenschicht) bereitgestellt.

Daran anschließend war jeweils die zweite bzw. fünfte Schicht als 52 µm starke Stabilisierungsschicht mit 60 % eines HDPE mit einer Dichte von 0,96 g/cm³ und einem Schmelzflussindex von 0,6 g/10min, 25 % eines bimodalen LMDPE mit einer Dichte von 0,93 g/cm³ und einem Schmelzflussindex von 0,5 g/10min sowie 15 % eines LLDPE mit einer Dichte von 0,92 g/cm³ und einem Schmelzflussindex von 1,2 g/10 min vorgesehen. Der hohe Anteil an HDPE sorgte insbesondere für eine hohe Festigkeit und Steiffigkeit der gesamten Siegellage. Dieser Effekt wurde zusätzlich dadurch begünstigt, dass die beiden Stabilisierungsschichten (zweite und fünfte Schicht) in der Mitte durch die miteinander verblockten dritten und vierten Schichten mit einem Abstand versehen wurden. Hierdurch stellte sich ein sog. "Sperrholz"-Effekt ein, durch den die Biegesteifigkeit zusätzlich erhöht wurde.

Die miteinander verblockten dritten und vierten Schichten waren jeweils 12 µm stark ausgebildet und aus 100 % Ethylen-Vinylacetat-Copolymer (EVA) mit einem Vinylacetat-Gehalt von 18 Gew.-% ausgebildet. Diese Kunststoffschicht wies eine Dichte von 0,94 g/cm³ bei einem Schmelzflussindex von 0,5 g/10 min auf. Der hohe Vinylacetat-Gehalt führte zu einer besonders klebrigen Kunststoffschmelze. Dies war vorteilhaft, da die Folienblase im noch erwärmten Zustand kollabiert wurde, sodass die einander zugewandten EVA-Schichten miteinander verblocken. Hierdurch wurde eine besonders innige Verbindung der beiden Folienschichten erzielt, welche - wenn überhaupt - nur noch unter dem Mikroskop von einer einzigen durchgängigen und doppelt so starken Schicht unterschieden werden kann.

Als Alternative zu EVA kann auch ein Plastomer als klebrigmachendes Verblockungsmittel eingesetzt werden.

### Vergleichsmessungen

Die drei verwendeten Vergleichsmuster wiesen eine insgesamt identische Stärke des Folienverbunds und jeweils identische Außenlagen und Barrierelagen auf. Hierdurch ließen sich die - maßgeblich durch die Siegelschicht bestimmten - mechanischen Eigenschaften direkt und quantitativ miteinander vergleichen. Hierzu wurden unterschiedliche standardisierte und nichtstandardisierte Vergleichstests durchgeführt:
Im Rahmen der Vergleichsmessungen wurde festgestellt, dass der erfindungsgemäße Folienverbund gemäß dem dritten Muster - bei identischer Stärke - eine deutlich verbesserte Biegesteifigkeit aufwies. Die übrigen mechanischen Eigenschaften und internen Qualitätstests lieferten gleichzeitig konsistent gleichwertige Ergebnisse.

In den Vergleichsmessungen wurde zunächst die Biegesteifigkeit nach DIN 53121 bestimmt. Hierbei wurden zu den unterschiedlichen Mustern jeweils mindestens fünf Proben separat vermessen. Die dabei ermittelten Werte für die erfindungsgemäße Biegesteifigkeit liegen 50 % über den aus dem Stand der Technik entnommenen Mustern 1 und 2. Dies ist anhand der nachfolgenden Tab. 1 dargestellt:

| Eigenschaft | Prüfrichtung | Messwert:Minimum/**Mittelwert**/Maximum | | | Einheit |
|---|---|---|---|---|---|
| | | Stand der Technik | | Erfindung | |
| | | Muster 1 | Muster 2 | Muster 3 | |
| Biegesteifigkeit | MD | 440/**453**/462 | 557/**572**/617 | 738/**749**/753 | mNmm |
| | CD | 467/**496**/522 | 617/**639**/673 | 713/**741**/753 | |

Zu Qualitätssicherung wurden bei den drei Vergleichsmustern auch weitere charakteristische mechanische Eigenschaften vermessen und miteinander verglichen. So wurden in einer weiteren Messkampagne aus jeweils fünf Einzel Proben die Eigenschaften der Folienmechanik nach ISO 527-1 ermittelt. Die Ergebnisse zeigen ein insgesamt gleichwertiges und konsistentes Verhalten des erfindungsgemäßen Folienverbunds im Vergleich zu den gattungsbildenden Vergleichsmustern. Die Ergebnisse sind in der nachfolgenden Tab. 2 dargestellt:

| Eigenschaft | Prüfrichtung | Messwert:Minimum/**Mittelwert**/Maximum | | | Einheit |
|---|---|---|---|---|---|
| | | Stand der Technik | | Erfindung | |
| | | Muster 1 | Muster 2 | Muster 3 | |
| Reißfestigkeit | MD | 94/**97**/100 | 101/**104**/107 | 102/**106**/109 | N/15mm |
| | | 27/**28**/29 | 30/**31**/32 | 29/**31**/31 | N/mm² |
| E-Modul | | 315/**322**/338 | 447/**456**/464 | 380/**398**/418 | N/mm² |
| Bruchdehnung | | 55/**60**/70 | 58/**64**/68 | 61/**65**/72 | % |
| Reißfestigkeit | CD | 62/**67**/70 | 63/**64**/65 | 60/**67**/74 | N15mm |
| | | 19/**20**/20 | 19/**19**/19 | 17/**20**/22 | N/mm² |
| E-Modul | | 319/**333**/347 | 457/**460**/464 | 411/**425**/438 | N/mm² |
| Bruchdehnung | | 919/**985**/1045 | 224/**359**/556 | 750/**910**/1025 | % |

Auch wurden die Folienverbunde einer Überprüfung der Durchstichfestigkeit nach DIN 14477 unterzogen. Hierzu wurden jeweils zehn Einzelmessungen an fertig konfektionierten Beuteln aus den verschiedenen Muster-Materialien von der Innenseite in Richtung zur Außenseite - entsprechend einer Stichrichtung von der Siegellage in Richtung zur Außenlage - durchgeführt. Auch in diesem Versuch zeigte das erfindungsgemäße Folienlaminat eine gleichwertige Widerstandskraft zu den Mustern aus dem Stand der Technik. - Entsprechend Tab. 3:

| Prüfrichtung | Messwert:Minimum/**Mittelwert**/Maximum | | | Einheit |
|---|---|---|---|---|
| | Stand der Technik | | Erfindung | |
| | Muster 1 | Muster 2 | Muster 3 | |
| Durchstich von Beutelinnenseite nach Außenseite | 6,5/**7,1**/7,6 | 7,3/**7,6**/8,3 | 7,1/**7,6**/8,1 | N |

Weiterhin hat die Anmelderin auch Vergleichstest gemäß DIN 55529 durchgeführt, wobei die Siegelnähte in einer Beutelanlage hergestellt wurden. So wurde in einem weiteren Vergleichstest die Festigkeit der Siegelnähte verglichen.

Hierzu wurden zunächst Folienbeutel aus den zu vergleichenden Verbundmaterialien hergestellt. Die untersuchte Quersiegelnaht im Bodenbereich der Folienbeutel wurde dabei mit dauerhaft beheizten Siegelbacken in einer Siegelzeit von 0,7 s miteinander verbunden. Die obere Siegelbacke hatte dabei eine Temperatur von 230 °C und die untere Siegelbacke eine Temperatur von 215 °C.

Anschließend wurden aus den konfektionierten Beuteln 15 mm breite und mindestens 100 mm lange Streifen senkrecht zu den Nähten ausgeschnitten. Diese Proben wurden mit ihren Enden in einer Zugprüfmaschine eingespannt, sodass sich die Siegelnaht mittig zwischen den Einspannbacken befand. Der Backenabstand betrug dabei zu Beginn der Testprozedur 50 mm. Danach wurde die zur Lösung der Siegelnaht von 15 mm erforderliche Kraft in Newton gemessen. Wie der nachstehenden Tab. 4 zu entnehmen ist, entspricht die Siegelnahtfestigkeit des erfindungsgemäßen Folienverbunds den Werten aus dem Stand der Technik:

| Nahtposition | Messwert:Minimum/**Mittelwert**/Maximum | | | Einheit |
|---|---|---|---|---|
| | Stand der Technik | | Erfindung | |
| | Muster1 | Muster 2 | Muster 3 | |
| Quernaht | 46/**47**/49 | 55/**59**/62 | 49/**53**/55 | N/15mm |

Die strukturelle Integrität der hergestellten Beutel aus den unterschiedlichen Vergleichsmaterialien wurde in einem praxisnahen Test überprüft. Hierzu wurden die Beutel mit einem Kunststoffgranulat befüllt. Aufgrund des gewählten Beutelformats und gemäß der Anwendung wurde bei den Vergleichsbeuteln eine spezifizierte Füllmenge von 15 kg Trockenfutter gewählt. Die Beutel wurden jeweils aus 1 m Höhe in unterschiedlichen Ausrichtungen zu Boden fallengelassen. Die Ausrichtungen waren dabei so gewählt, dass die befüllten Beutel jeweils mit der Frontseite, der Rückseite sowie mit einer Bodenfläche auftrafen. Keiner der verwendeten Testbeutel hat dabei Schaden genommen. Insbesondere sind keine Folienteile des Beutels zerstört oder Siegelnähte gelöst worden.

Auch im direkten Vergleich der Muster konnte die reduzierte Welligkeit bzw. die verbesserte Planlage des erfindungsgemäßen Materials gezeigt werden. Hierzu wurden mehrere, aus den jeweiligen Materialien hergestellte Folienverpackungsbeutel in einem Stoß übereinandergelegt. Dabei erreichte der Stoß aus Beuteln des erfindungsgemäßen Materials im kräftefreien Zustand eine um ca. 50 % reduzierte Höhe im Vergleich zu den Testbeuteln aus dem Material 1 oder 2.

Die Vergleichsmessungen des Ausführungsbeispiels belegen verbesserte mechanische Eigenschaften des erfindungsgemäßen Einstoff-Folienverbunds. Hierdurch kann ein adäquater Ersatz für herkömmliche Folienverbunde bereitgestellt werden.

Als Maßstab kann ein konventioneller Vielstoff-Folienverbund mit einer 20 µm starken Außenlage aus orientiertem Polypropylen (OPP), einer Zwischenlage von 12 µm aus metallisiertem Polyethylenterephthalat (PET-met) und einer Siegellage aus Polyethylen mit einer Stärke von 140 µm herangezogen werden.

Dies resultiert in einer Verbundstärke von ca. 172 µm (zuzüglich Klebstoff- und Druckschichten).

Um vergleichbare mechanische Eigenschaften und auch eine ausreichende Barrierefunktion zu erzielen, waren bisher im Stand der Technik als "Einstoff"-Material deutlich größere Schichtdicken erforderlich. So konnten beispielsweise mit einem Folienverbund aus 25 µm eines in Maschinenrichtung orientierten PE (MDOPE), 30 µm einer metallisierten PE-Folie (ggf. mit coextrudierter EVOH-Barriereschicht oder monoaxial gereckt) und einer PE-Siegelschicht von 140 µm vergleichbare Eigenschaften erzielt werden. Dieser Folienverbund weist dabei aber eine deutlich größere Gesamtdicke von zumindest 195 µm aus - und entsprechend höherem Materialeinsatz und größeren Umweltauswirkungen.

Aufgrund der verbesserten spezifischen Biegesteifigkeit der erfindungsgemäßen Siegellage kann deren Schichtdicke im Gesamtverbund reduziert werden. So ist in Rahmen der Erfindung bei insgesamt gleichwertigen mechanischen Eigenschaften eine zusätzliche Materialreduzierung möglich. Im Zusammenspiel einer verblockten MDOPE-Drucklage von 30 µm mit einer verblockten PE-EVOH-PE-Barrierelage von 60 µm und einer 80 µm starken verblockten Barrierelage lassen sich gleichwertige mechanische Eigenschaften bei einer Netto-Gesamtstärke von 170 µm erzielen. Durch die erfindungsgemäße Lehre kann der Folienverbund daher sogar insgesamt gegenüber Mehrstoff-Laminaten verringert werden.

Die Erfindung wird nachfolgend anhand einer einzigen Figur erläutert. Diese stellt ein Ausführungsbeispiel gemäß dem Muster 3 der Vergleichsmessungen im Querschnitt dar.

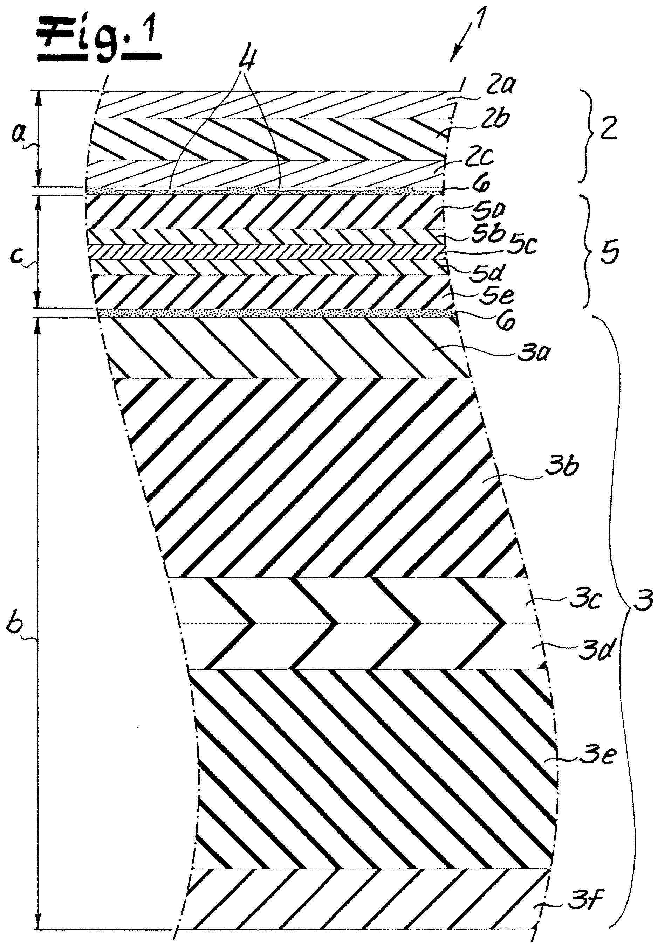

Die Fig. 1 zeigt einen Querschnitt durch einen erfindungsgemäßen Polyolefin-basierten Folienverbund 1. Dieser umfasst eine monoaxial in der Maschinenrichtung (x) gereckte erste Folienlage 2 und eine indirekt mit der ersten Folienlage 2 verbundene zweite Folienlage 3.

Die erste Folienlage 2 ist als Drucklage ausgebildet und weist auf der der zweiten Folienlage 3 zugewandten Seite eine Druckschicht 4 auf. Diese Druckschicht enthält ein Gemisch aus einem Bindemittel und Druckpigmenten.

Weiterhin ist die erste Folienlage 2 als dreischichtige Coextrusionsfolie ausgebildet mit einer ersten Außenschicht 2a aus einem Blend enthaltend PE-HD und PE-LMD, einer Kernschicht 2b mit einem Blend aus PE-HD, LLD und -MD sowie einer durch die Druckschicht 4 bedruckten Innenschicht 2c aus 7 µm eines Blends aus PE-HD und -LMD. Die Gesamtstärke der ersten Folienlage 2 beträgt 25 µm bei einer gesamten Dichte von 0,94 g/cm³.

Zwischen der ersten Folienlage 2 und der zweiten Folienlage 3 ist eine weitere Folienlage 5 in Form einer Barrierelage angeordnet. Die Barrierelage ist als symmetrische fünfschichtige Coextrusionsfolie ausgebildet mit einer 9 µm starken ersten Folienschicht 5a und fünften Folienschicht 5e aus Polyethylen. Daran anschließend sind jeweils eine 4 µm starke Haftvermittlerschicht als zweite Folienschicht 5b und vierte Folienschicht 5d aus einem mit Maleinsäureanhydrid gepropften Polyethylen angeordnet. Den Kern der Barrierelage 5 bildet eine 4 µm starke Sauerstoff- und Fettbarriere aus EVOH mit einem Ethylen-Anteil von 32 Gew.-%. Die erste Folienschicht 5a und die fünfte Folienschicht 5e sind jeweils über eine Kaschierkleber-Lage 6 auf Polyurethan-Basis mit der ersten Lage 2 bzw. der zweiten Lage 3 vollflächig kaschiert.

Die zweite Folienlage 3 ist der ersten Folienlage 2 gegenüberliegend an einer Außenseite des Folienverbunds 1 angeordnet und als Siegellage ausgebildet. Sie ist aus einer kollabierten dreischichtig coextrudierten Folienblase gebildet, sodass sich ein symmetrischer sechsschichtiger Aufbau ergibt: Die erste, der Barrierelage 5 zugewandte Folienschicht 3a sowie die sechste Folienschicht 3f der zweiten Folienlage 3 sind aus einem Blend von 65 Gew.-% PE-LLD-m und 35 Gew.-% eines PE-Plastomers gebildet mit einer Stärke von 16 µm. Als Kernschichten der Siegellage 3 sind als zweite Schicht 3b und fünfte Schicht 3e 52 µm eines Blends aus 60 Gew.-% PE-HD, 25 Gew.-% eines bimodalen PE-LMD und 15 Gew.-% eines PE-LLD ausgebildet. Der besonders hohe HDPE-Anteil verbessert dabei die Festigkeit und Steifigkeit der Siegellage 3.

Erfindungsgemäß weist die zweite Folienlage 3 eine dritte Folienschicht 3c und eine vierte Folienschicht 3d auf, welche erfindungsgemäß miteinander verblockt sind. Die dritte Folienschicht 3c und die vierte Folienschicht 3d sind dabei aus 100 Gew.-% EVA mit einem VA-Gehalt von 18 Gew.-% ausgebildet. Dieser hohe VA-Gehalt verbessert die Klebefähigkeit, insbesondere im erwärmten Zustand zum Zeitpunkt des Verblockens. Die beiden miteinander verblockten EVA-Schichten 3c, 3d weisen jeweils eine Stärke von 12 µm - also eine Gesamtstärke von 24 µm auf.

In dem gezeigten Ausführungsbeispiel weist die erste Folienlage 2 eine Dicke a von 25 µm auf. Die zweite Folienlage 3 weist eine Dicke b von 160 µm auf. Die Barrierelage 5 ist ihrerseits mit einer Stärke c von 30 µm ausgebildet.

## Patentansprüche

1. Polyolefin-basierter Folienverbund (1) umfassend eine monoaxial gereckte erste Folienlage (2) und eine direkt oder indirekt mit der ersten Folienlage (2) verbundene zweite Folienlage (3) , **dadurch gekennzeichnet, dass** die zweite Folienlage (3) ungereckt ist und zumindest zwei miteinander verblockte Folienschichten (3c, 3d) aufweist.

2. Folienverbund (1) nach Anspruch 1, **dadurch gekennzeichnet, dass** die erste Folienlage (2) eine Druckschicht (4) aufweist.

3. Folienverbund (1) nach Anspruch 1 oder 2, **gekennzeichnet durch** zumindest eine weitere Folienlage (5).

4. Folienverbund (1) nach einem der Ansprüche 1 bis 3, **dadurch gekennzeichnet, dass** die zweite Folienlage (3) an einer Außenseite des Folienverbunds (1) angeordnet und als Siegellage ausgebildet ist.

5. Folienverbund (1) nach Anspruch 4, **dadurch gekennzeichnet, dass** die Siegellage (3) einen Gewichtsanteil von zumindest 30 % an HDPE aufweist.

6. Folienverbund (1) nach Anspruch 5, **dadurch gekennzeichnet, dass** das HDPE ausschließlich in einer oder mehreren Kernschichten (3b, 3e) angeordnet ist.

7. Folienverbund (1) nach einem der Ansprüche 4 bis 6, **dadurch gekennzeichnet, dass** die Siegellage (3) zumindest eine Siegelschicht (3f) mit zumindest 20 Gew.-% PE mit einer Dichte von nicht mehr als 0,905 g/cm³ aufweist.

8. Folienverbund (1) nach Anspruch 7, **dadurch gekennzeichnet, dass** die Siegelschicht (3f) zumindest 70 Gew.-% PE mit einer Dichte von nicht mehr als 0,92 g/cm³ enthält.

9. Folienverbund (1) nach Anspruch 7 oder 8, **dadurch gekennzeichnet, dass** die Siegelschicht (3f) ein PE-Plastomer, vorzugsweise zu zumindest 30 Gew.-%, enthält.

10. Folienverbund (1) nach einem der Ansprüche 1 bis 9, **dadurch gekennzeichnet, dass** sämtliche Folienlagen (2, 3, 5) auf Polyethylen (PE) basieren.

11. Folienverbund (1) nach einem der Ansprüche 1 bis 9, **dadurch gekennzeichnet, dass** sämtliche Folienlagen (2, 3, 5) auf Polypropylen (PP) basieren.

12. Folienverbund (1) nach einem der Ansprüche 1 bis 11, **dadurch gekennzeichnet, dass** mehrere, vorzugsweise sämtliche Folienlagen (2, 3, 5) zumindest jeweils zwei miteinander verblockte Folienschichten (3c, 3d) aufweisen.

13. Folienverbund (1) nach einem der Ansprüche 1 bis 12, **dadurch gekennzeichnet, dass** zumindest eine Folienlage (5) als mehrschichtige Folie zumindest eine Barriereschicht (5c), insbesondere aus Ethylen-Vinylalkohol-Copolymer (EVOH), aufweist.

14. Folienverbund (1) nach Anspruch 13, **dadurch gekennzeichnet, dass** die Barriereschicht (5c) eine Stärke von max. 10 µm, vorzugsweise max. 5 µm aufweist.

15. Folienverbund (1) nach einem der Ansprüche 1 bis 14, **dadurch gekennzeichnet, dass** die erste Folienlage (2) eine Dicke (a) zwischen 20 µm und 50 µm, vorzugsweise zwischen 25 µm und 35 µm, insbesondere ca. 30 µm aufweist.

16. Folienverbund (1) nach einem der Ansprüche 1 bis 15, **dadurch gekennzeichnet, dass** die zweite Folienlage (3) eine Dicke (b) zwischen 60 µm und 200 µm, insbesondere zwischen 100 µm und 180 µm aufweist.

17. Folienverbund (1) nach einem der Ansprüche 1 bis 16, **dadurch gekennzeichnet, dass** die erste Folienlage (2) und die zweite Folienlage (3) eine summierte Dicke zwischen 80 µm und 250 µm, insbesondere zwischen 120 µm und 200 µm aufweisen.

18. Verpackungsbeutel mit einem Innenraum, welcher durch zumindest einen Folienabschnitt begrenzt ist, **dadurch gekennzeichnet, dass** der Folienabschnitt aus einem Folienverbund (1) gemäß einem der Ansprüche 1 bis 17 gebildet ist.

## Claims

1. Polyolefin-based film composite (1) comprising a monoaxially stretched first film layer (2) and a second film layer (3) bonded directly or indirectly to the first film layer (2), **characterized in that** the second film layer (3) is unstretched and comprises at least two film plies (3c, 3d) which are blocked to one another.

2. Film composite (1) according to Claim 1, **characterized in that** the first film layer (2) comprises a printed layer (4).

3. Film composite (1) according to Claim 1 or 2, **characterized by** at least one further film layer (5).

4. Film composite (1) according to one of Claims 1 to 3, **characterized in that** the second film layer (3) is arranged on an outer side of the film composite (1) and is embodied as a sealing layer.

5. Film composite (1) according to Claim 4, **characterized in that** the sealing layer (3) has a proportion by weight of at least 30% of HDPE.

6. Film composite (1) according to Claim 5, **characterized in that** the HDPE is arranged exclusively in one or more core plies (3b, 3e).

7. Film composite (1) according to one of Claims 4 to 6, **characterized in that** the sealing layer (3) comprises at least one sealing ply (3f) comprising at least 20% by weight of polyethylene having a density of not more than 0.905 g/cm³.

8. Film composite (1) according to Claim 7, **characterized in that** the sealing ply (3f) contains at least 70% by weight of polyethylene with a density of not more than 0.92 g/cm³.

9. Film composite (1) according to Claim 7 or 8, **characterized in that** the sealing ply (3f) preferably contains at least 30% by weight of a polyethylene plastomer.

10. Film composite (1) according to any one of Claims 1 to 9, **characterized in that** all the film layers (2, 3, 5) are based on polyethylene (PE).

11. Film composite (1) according to any one of Claims 1 to 9, **characterized in that** all the film layers (2, 3, 5) are based on polypropylene (PP).

12. Film composite (1) according to any one of Claims 1 to 11, **characterized in that** a plurality of, preferably all the film layers (2, 3, 5) each comprise at least two film plies (3c, 3d) which are blocked to one another.

13. Film composite (1) according to any one of Claims 1 to 12, **characterized in that** at least one film layer (5) as a multilayer structure comprises at least one barrier ply (5c), in particular made of ethylene-vinyl alcohol copolymer (EVOH).

14. Film composite (1) according to Claim 13, **characterized in that** the barrier ply (5c) has a thickness of at most 10 µm, preferably of at most 5 µm.

15. Film composite (1) according to any one of Claims 1 to 14, **characterized in that** the first film layer (2) has a thickness (a) between 20 µm and 50 µm, preferably between 25 µm and 35 µm, in particular about 30 µm.

16. Film composite (1) according to any one of Claims 1 to 15, **characterized in that** the second film layer (3) has a thickness (b) of between 60 µm and 200 µm, in particular between 100 µm and 180 µm.

17. Film composite (1) according to any one of Claims 1 to 16, **characterized in that** the first film layer (2) and the second film layer (3) have a total thickness of between 80 µm and 250 µm, in particular between 120 µm and 200 µm.

18. Packaging bag having an interior space defined by at least one film portion, **characterized in that** the film portion is formed from a film composite (1) according to any one of Claims 1 to 17.

## Revendications

1. Film composite à base de polyoléfine (1) comprenant une première épaisseur de film (2) étirée monoaxialement et une seconde épaisseur de film (3) reliée directement ou indirectement à la première épaisseur de film (2), **caractérisé en ce que** la seconde épaisseur de film (3) n'est pas étirée et présente au moins deux couches de film (3c, 3d) bloquées l'une avec l'autre.

2. Film composite (1) selon la revendication 1, **caractérisé en ce que** la première épaisseur de film (2) présente une couche d'impression (4).

3. Film composite (1) selon la revendication 1 ou 2, **caractérisé par** au moins une épaisseur de film supplémentaire (5).

4. Film composite (1) selon l'une des revendications 1 à 3, **caractérisé en ce que** la seconde épaisseur de film (3) est disposée sur une face extérieure du film composite (1) et formée en tant qu'épaisseur d'étanchéité.

5. Film composite (1) selon la revendication 4, **caractérisé en ce que** l'épaisseur d'étanchéité (3) présente une teneur en poids d'au moins 30 % de HDPE.

6. Film composite (1) selon la revendication 5, **caractérisé en ce que** le HDPE est disposé exclusivement dans une ou plusieurs couche(s) principale(s) (3b, 3e).

7. Film composite (1) selon l'une des revendications 4 à 6, **caractérisé en ce que** l'épaisseur d'étanchéité (3) présente au moins une couche d'étanchéité (3f) avec au moins 20 % en poids de PE avec une densité inférieure ou égale à 0,905 g/cm³.

8. Film composite (1) selon la revendication 7, **caractérisé en ce que** la couche d'étanchéité (3f) contient au moins 70 % en poids de PE avec une densité inférieure ou égale à 0,92 g/cm³.

9. Film composite (1) selon la revendication 7 ou 8, **caractérisé en ce que** la couche d'étanchéité (3f) contient un plastomère PE, de préférence d'au moins 30 % en poids.

10. Film composite (1) selon l'une des revendications 1 à 9, **caractérisé en ce que** l'ensemble des épaisseurs de films (2, 3, 5) sont à base de polyéthylène (PE).

11. Film composite (1) selon l'une des revendications 1 à 9, **caractérisé en ce que** l'ensemble des épaisseurs de films (2, 3, 5) sont à base de polypropylène (PP).

12. Film composite (1) selon l'une des revendications 1 à 11, **caractérisé en ce que** plusieurs, de préférence l'ensemble des épaisseurs de films (2, 3, 5) présentent respectivement au moins deux couches de films (3c, 3d) bloquées l'une avec l'autre.

13. Film composite (1) selon l'une des revendications 1 à 12, **caractérisé en ce qu'**au moins une épaisseur de film (5) en tant que film multi-couches présente au moins une couche barrière (5c), en particulier en copolymère éthylène alcool vinylique (EVOH).

14. Film composite (1) selon la revendication 13, **caractérisé en ce que** la couche barrière (5c) présente une épaisseur de max. 10 µm, de préférence max. 5 µm.

15. Film composite (1) selon l'une des revendications 1 à 14, **caractérisé en ce que** la première épaisseur de film (2) présente une densité (a) entre 20 µm et 50 µm, de préférence entre 25 µm et 35 µm, en particulier environ de 30 µm.

16. Film composite (1) selon l'une des revendications 1 à 15, **caractérisé en ce que** la seconde épaisseur de film (3) présente une densité (b) entre 60 µm et 200 µm, en particulier entre 100 µm et 180 µm.

17. Film composite (1) selon l'une des revendications 1 à 16, **caractérisé en ce que** la première épaisseur de film (2) et la seconde épaisseur de film (3) présentent une densité additionnelle entre 80 µm et 250 µm, en particulier entre 120 µm et 200 µm.

18. Sachet d'emballage comprenant un espace intérieur qui est délimité par au moins un tronçon de film, **caractérisé en ce que** le tronçon de film est formé d'un film composite (1) selon l'une des revendications 1 à 17.
